# DEMANDE DE BREVET EUROPEEN

(11) **EP 0 677 689 A1**
(43) Date de publication de la demande: **18.10.1995**
(21) Numéro de dépôt: 95400581.5
(22) Date de dépôt: 16.03.1995
(51) Int. Cl.: F16L 3/24, F16L 3/133, F16L 3/16, F16B 5/02

(54) **Dispositif réglable de suspension d'une tuyauterie**

(30) Priorité: 17.03.1994 FR 9403141
(71) Demandeur: SOCIETE NOUVELLE DES ETS CITA, F-21760 Lamarche sur Saone (FR)
(72) Inventeur: Piot, Jean-Claude, F-21760 Lamarche sur Saone (FR)
(74) Mandataire: Bruder, Michel

(57) **Abrégé**

L'invention concerne un dispositif réglable de suspension d'une tuyauterie ou analogue caractérisé en ce qu'il comprend au moins une console (3) en forme de T ayant une plaque de base verticale (4), fixée à un support (2) dans une position réglable dans une première direction horizontale (X), et une branche horizontale (5), perpendiculaire à la plaque de base, un élément intermédiaire (11,22) monté réglable sur la branche horizontale (5) de la console (3) dans la direction longitudinale de cette branche horizontale (5) correspondant à une seconde direction de réglage (Y), et une tige (16), de longueur réglable, qui est accrochée, à son extrémité supérieure, à l'élément intermédiaire réglable (11,22), par l'intermédiaire d'une articulation permettant une inclinaison de la tige par rapport à la verticale, et dont l'extrémité inférieure est reliée à un collier (16d) supportant la tuyauterie (1).

## Description

La présente invention concerne un dispositif de suspension d'une tuyauterie ou analogue.

Un dispositif de suspension d'une tuyauterie doit répondre à diverses conditions de montage et de fonctionnement, à savoir assurer une verticalité des tiges de suspension correspondant aux tolérances requises, ne pas engendrer de déformations sur la tuyauterie et assurer une reprise du poids de cette tuyauterie tout en permettant un éventuel déplacement axial de celle-ci. Pour répondre à ces conditions le dispositif de suspension doit être assemblé sur le site même où est installée la tuyauterie, afin de compenser les tolérances de mise en position des éléments du génie civil et de la ligne de tuyauterie, étant donné qu'il est plus facile d'ajuster le dispositif de suspension que la ligne de tuyauterie ou les éléments du génie civil.

La présente invention a pour but de fournir un dispositif de suspension de conception particulièrement simple et permettant de satisfaire aisément à ces exigences.

A cet effet ce dispositif de suspension d'une tuyauterie est caractérisé en ce qu'il comprend au moins une console en forme de T ayant une plaque de base verticale, fixée à un support dans une position réglable dans une première direction horizontale, et une branche horizontale, perpendiculaire à la plaque de base, un élément intermédiaire monté réglable sur la branche horizontale de la console dans la direction longitudinale de cette branche horizontale correspondant à une seconde direction de réglage, et une tige, de longueur réglable, qui est accrochée, à son extrémité supérieure, à l'élément intermédiaire réglable, par l'intermédiaire d'une articulation permettant une inclinaison de la tige par rapport à la verticale, et dont l'extrémité inférieure est reliée à un collier supportant la tuyauterie.

On décrira ci-après, à titre d'exemple non limitatif, une forme d'exécution de la présente invention en référence aux dessins annexés sur lesquels :
- la figure 1 est une vue en perspective schématique d'un dispositif de suspension d'une tuyauterie suivant l'invention.
- la figure 2 est une vue en coupe partielle, à plus grande échelle, du dispositif de suspension dans un plan vertical et longitudinal de la console.
- la figure 3 est une vue en coupe verticale suivant la ligne III-III de la figure 2.
- la figure 4 est une vue en perspective partielle d'un dispositif de suspension à console double pour supporter des charges élevées.
- la figure 5 est une vue en perspective illustrant l'utilisation du dispositif de suspension suivant l'invention pour la reprise d'une tuyauterie posée.

Le dispositif de suspension suivant l'invention est prévu pour suspendre une tuyauterie 1, représentée schématiquement, à un support horizontal 2 solidaire de la structure d'un bâtiment dans lequel est logée la tuyauterie 1. Le dispositif de suspension comprend une console horizontale 3 qui est perpendiculaire au support horizontal 2 sur lequel elle est fixée d'une manière réglable dans le sens longitudinal et horizontal, indiqué par la flèche X, constituant une première direction de réglage du dispositif de suspension. La console 3 présente la forme d'un T et elle comporte une plaque de base verticale 4 à partir de laquelle s'étend une branche horizontale perpendiculaire 5, de section transversale rectangulaire ou carrée. La plaque de base 4 est fixée sur une paroi verticale du support horizontal 2, au moyen de boulons 6 traversant des trous percés dans le support 2 et des lumières horizontales 7, s'étendant dans la direction X, formées dans la plaque de base 4, au-dessus et en dessous de la branche horizontale 5. La plaque de base 4 comporte, sur sa face externe, le long de chaque lumière 7, une plaquette rapportée horizontale 8, fixée par exemple par soudure, présentant une denture 8a le long de son bord longitudinal qui est voisin de la lumière 7. Avec cette denture est en prise une denture correspondante d'une plaquette de fixation 9 amovible qui est percée d'un trou pour le passage du boulon 6.

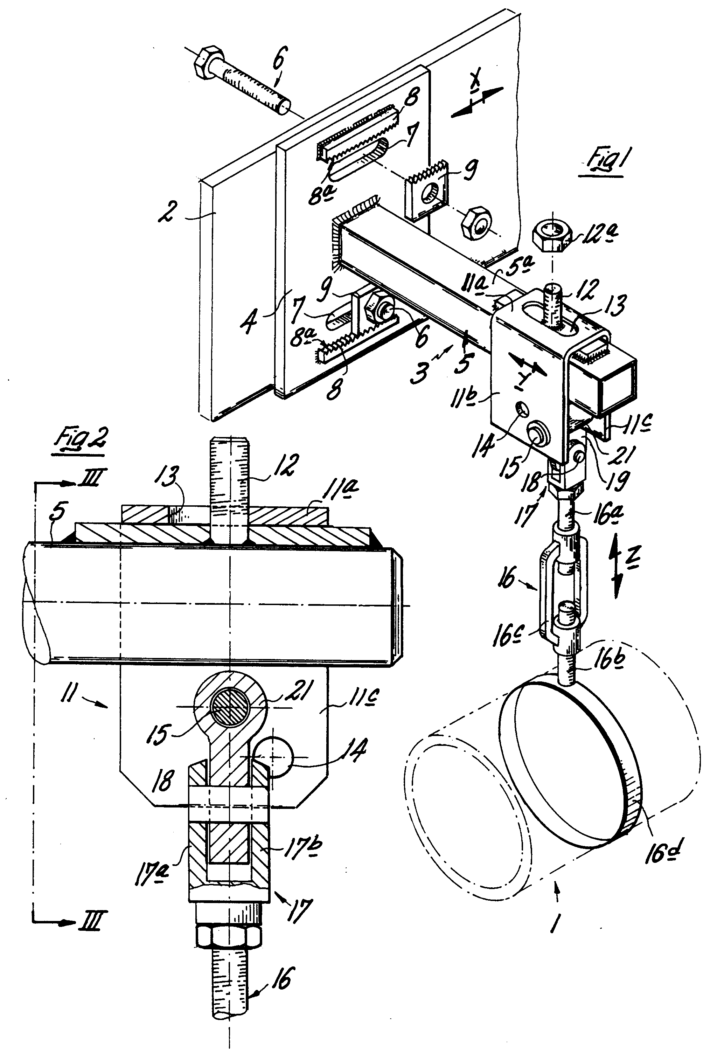

Comme on peut le voir sur la figure 1, la position de la plaque de base 4 et par conséquent de l'ensemble de la console 3 peut être ajustée dans la première direction de réglage horizontale X, au moyen de la plaquette de fixation dentée 9 en prise avec une partie appropriée variable de la denture 8a de la plaquette allongée fixe 8, le boulon 6 étant lui immobilisé en position dans le trou prévu à cet effet dans la paroi du support 2.

La branche horizontale 5 de la console 3 porte un cavalier 11 en forme de U inversé, comportant une âme horizontale supérieure 11a qui est prolongée vers le bas par deux ailes latérales et verticales 11b et 11c. L'âme horizontale supérieure 11a du cavalier 11 est en appui sur la face horizontale supérieure 5a de la branche horizontale 5 et elle peut être réglée dans la position désirée, dans la direction longitudinale Y de la branche 5, correspondant à une deuxième direction de réglage possible du dispositif de suspension. Le cavalier 11 peut être bloqué dans la position appropriée sur la branche 5 au moyen d'un goujon vertical 12 soudé à la face supérieure 5a de la branche 5 et traversant une lumière longitudinale 13, c'est-à-dire s'étendant dans la direction Y, laquelle est percée dans l'âme 11a du cavalier 11. Le blocage du cavalier 11 est réalisé au moyen d'un écrou 12a vissé sur le goujon 12.

Chacune des deux ailes verticales 11b, 11c du cavalier 11 est percée, dans sa partie inférieure, de plusieurs trous 14 alignés horizontalement et qui sont destinés à recevoir, dans l'une des positions correspondant à ces paires de trous 14, un axe horizontal 15 s'étendant parallèlement à la première direction X. Sur cet axe est montée à rotation une tige 16 s'étendant vers le bas et qui est solidaire, à son extrémité inférieure, d'un collier 16d entourant la tuyauterie 1, pour encaisser le poids de celle-ci. La tige 16 est réglable en longueur dans le sens vertical, c'est-à-dire suivant une troisième direction de réglage Z du dispositif de suspension. Ce réglage en longueur peut être avantageusement réalisé en prévoyant la tige 16 en deux parties filetées 16a, 16b, de pas inverses accouplées entre elles par un tendeur à lanterne 16c.

Selon une variante avantageuse du dispositif, les trous 14 sur les ailes 11b et 11c du cavalier 11 sont disposés à l'avant ou à l'arrière dudit cavalier par rapport à son axe de symétrie verticale de telle sorte que par retournement du même cavalier dans une rotation horizontale on obtienne une nouvelle série de positonnements discrets selon la seconde direction de réglage Y.

Il suffit ainsi de pré-positionner ledit cavalier 11 sur la branche horizontale 5 pour avoir lesdits trous 14 plûtot à l'avant ou plutôt à l'arrière, le réglage fin de la position de l'axe 15 se faisant par le choix des trous 14 comme il a déjà été dit.

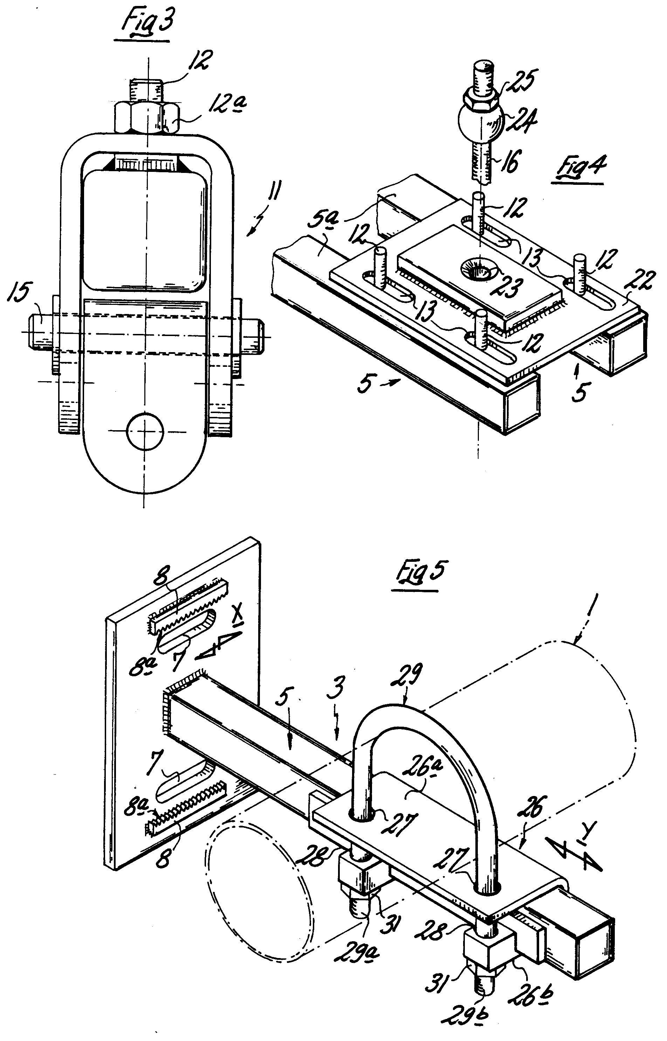

Les figures 2 et 3 représentent, à titre d'exemple non limitatif, une forme d'exécution d'un dispositif d'accouplement entre la tige filetée 16 et l'axe de pivotement horizontal 15. L'extrémité supérieure de la tige filetée 16 est solidaire d'une chape 17 s'étendant vers le haut, dont les deux ailes verticales supérieures 17a, 17b sont percées de trous alignés recevant un axe d'articulation 18 parallèle à la seconde direction de réglage Y. Entre les deux ailes 17a et 17b est engagée une aile inférieure 19 qui forme une seule pièce, à son extrémité supérieure, avec un manchon 21 traversé par l'axe 15. L'aile inférieure 19 est percée d'un trou aligné avec les trous prévus dans les ailes 17a, 17b de la chape 17, pour le passage de l'axe 18. Par suite de cette construction la tige filetée 16 peut tourner, autour de l'axe 15, dans un premier plan vertical défini par les directions Y et Z, c'est-à-dire perpendiculaire à la première direction de réglage X, et elle peut également tourner, autour de l'axe 18, dans un second plan vertical défini par les directions X et Z, c'est-à-dire perpendiculaire à la seconde direction de réglage Y.

Dans la variante d'exécution représentée sur la figure 4, le dispositif de suspension suivant l'invention comprend deux consoles adjacentes dont les branches horizontales 5, situées au même niveau, s'étendent parallèlement l'une à l'autre à faible distance. Chacune des branches horizontales 5 porte, sur sa face supérieure 5a, deux goujons verticaux 12 espacés dans le sens longitudinal de la branche horizontale 5, c'est-à-dire dans la seconde direction de réglage Y. Dans ce cas le cavalier 11 de la première forme d'exécution représentée sur les figures 1 à 3, est remplacé par une plaque horizontale 22 percée de quatre lumières longitudinales 13, alignées deux par deux et à travers lesquelles passent respectivement les quatre goujons 12. La plaque support 22 peut être ainsi réglée dans la position longitudinale appropriée, c'est-à-dire suivant la seconde direction de réglage Y, sur les deux branches horizontales 5. La plaque 22 est percée, dans sa partie centrale, d'un trou vertical débouchant dans une cuvette sphérique supérieure 23. Cette cuvette 23 est destinée à servir de logement pour une rotule 24 montée en position réglable sur la partie extrême supérieure de la tige filetée 16 supportant la tuyauterie 1. La rotule 24 est bloquée sur la tige filetée 16, dans la position appropriée, au moyen d'un écrou 25. Dans cette forme d'exécution de l'invention, la tige filetée peut, du fait de sa liaison par une articulation sphérique avec la plaque support 22, prendre n'importe quelle inclinaison désirée par rapport à la verticale.

Comme dans la variante à une branche horizontale 5, le dispositif à deux branches qui vient d'être décrit peut être perfectionné en ce que la cuvette sphérique 23 est alors décallée suivant la direction Y en avant ou en arrière de l'axe de symétrie verticale de telle manière que par retournement de la pièce 22 dans une rotation horizontale, on détermine deux positionnements différents selon la seconde direction de réglage Y.

La figure 5 montre que le dispositif de suspension suivant l'invention peut être aussi utilisé pour une reprise d'une tuyauterie posée. Dans ce cas la branche horizontale 5 de la console 3 supporte un cavalier 26, à section transversale en U, s'étendant horizontalement. Le cavalier 26 comporte deux ailes supérieure 26a et inférieure 26b, plaquées respectivement contre les faces supérieure et inférieure de la branche horizontale 5 et qui sont percées, à leurs extrémités, de trous alignés verticalement 27, 28. Dans chaque paire de trous 27, 28 passe une branche verticale d'un étrier 29 dont la partie en V inversé s'étend vers le haut, au-dessus de l'aile horizontale supérieure 26a du cavalier 26, et qui a des dimensions suffisantes pour pouvoir coiffer la tuyauterie 1 qui est, dans ce cas, posée sur l'aile supérieure 26a du cavalier 26. Les parties extrêmes inférieures 29a, 29b des deux branches verticales de l'étrier 29 sont filetées de manière à recevoir des écrous 31 permettant de serrer l'étrier 29 sur la tuyauterie 1 et le cavalier 26 sur la branche horizontale 5 de la console.

D'après la description qui précède on peut voir que le dispositif de suspension suivant l'invention est d'une structure très simple et qu'il permet de s'adapter très aisément à la position d'une tuyauterie 1 et qu'il peut être aisément assemblé sur l'emplacement même de cette tuyauterie.

## Revendications

**1 -** Dispositif de suspension d'une tuyauterie caractérisé en ce qu'il comprend au moins une console (3) en forme de T ayant une plaque de base verticale (4), fixée à un support (2) dans une position réglable dans une première direction horizontale (X), et une branche horizontale (5), perpendiculaire à la plaque de base, un élément intermédiaire (11,22) monté réglable sur la branche horizontale (5) de la console (3) dans la direction longitudinale de cette branche horizontale (5) correspondant à une seconde direction de réglage (Y), et une tige (16), de longueur réglable, qui est accrochée, à son extrémité supérieure, à l'élément intermédiaire réglable (11,22), par l'intermédiaire d'une articulation permettant une inclinaison de la tige par rapport à la verticale, et dont l'extrémité inférieure est reliée à un collier (16d) supportant la tuyauterie (1).

**2 -** Dispositif suivant la revendication 1 caractérisé en ce que la plaque de base (4) de la console (3) est fixée au moyen de boulons (6) traversant des trous percés dans le support (2) et des lumières horizontales (7), s'étendant dans la première direction (X), formées dans la plaque de base (4), au-dessus et en dessous de la branche horizontale (5), cette plaque de base (4) comportant, le long de chaque lumière (7), une plaquette rapportée horizontale (8) présentant une denture (8a) le long de son bord longitudinal qui est voisin d'une lumière (7) et avec laquelle est en prise une denture correspondante d'une plaquette de fixation amovible (9) qui est percée d'un trou pour le passage d'un boulon (6).

**3 -** Dispositif suivant l'une quelconque des revendications précédentes caractérisé en ce que l'élément intermédiaire d'accrochage de l'extrémité supérieure de la tige (16) est constitué par un cavalier (11) en forme de U inversé, comportant une âme horizontale supérieure (11a) en appui sur la face horizontale supérieure (5a) de la branche horizontale (5) de la console (3) et prolongée vers le bas par deux ailes latérales et verticales (11b, 11c), l'âme horizontale supérieure (11a) du cavalier (11) étant percée d'une lumière longitudinale (13), s'étendant parallèlement à la seconde direction de réglage (Y), et à travers laquelle s'étend un goujon vertical (12) soudé à la face supérieure (5a) de la branche horizontale (5) et sur lequel est vissé un écrou (12a) de blocage du cavalier (11).

**4 -** Dispositif suivant la revendication 3 caractérisé en ce que les parties inférieures des deux ailes verticales (11b, 11c) du cavalier (11) sont percées de plusieurs trous (14) alignés horizontalement, destinées à recevoir un premier axe horizontal (15) s'étendant parallèlement à la première direction de réglage (X) et sur lequel est montée à rotation la tige (16).

**5 -** Dispositif selon la revendication 3 caractérisé en ce que les trous (14) sur les ailes verticales (11b,11c) du cavalier (11) sont disposés à l'avant ou à l'arrière dudit cavalier par rapport à son axe de symétrie verticale de telle sorte que par retournement du même cavalier dans une rotation horizontale, on obtienne une nouvelle série de positionnements discrets selon la seconde direction de réglage (Y).

**6 -** Dispositif suivant l'une quelconque des revendications 4 ou 5 caractérisé en ce que l'extrémité supérieure de la tige (16) est solidaire d'une chape (17) s'étendant vers le haut, dont les deux ailes verticales (17a, 17b) sont percées de trous alignés recevant un second axe d'articulation (18), parallèle à la seconde direction de réglage (Y), et entre les deux ailes (17a,17b) de la chape (17) est engagée une aile inférieure (19) qui est solidaire, à son extrémité supérieure, d'un manchon (21) traversé par le premier axe horizontal (15).

**7 -** Dispositif suivant l'une quelconque des revendications 4 à 6 caractérisé en ce que la tige (16) est constituée de deux parties filetées (16a,16b) de pas inverses, accouplées entre elles par un tendeur à lanterne (16c).

**8 -** Dispositif suivant l'une quelconque des revendications 1 et 2 caractérisé en ce qu'il comprend deux consoles voisines dont les branches horizontales parallèles (5), situées au même niveau portent une plaque (22), percées de lumières longitudinales (13) traversées par des goujons verticaux (12) solidaires des faces supérieures (5a) des branches horizontales (5), pour le réglage de la plaque (22) dans la seconde direction de réglage (Y), et cette plaque (22) présente, dans sa partie centrale, une cuvette sphérique (23) servant de siège pour une rotule (24) montée réglable sur la partie extrême supérieure de la tige (16), de manière à constituer une articulation supérieure sphérique pour cette tige (16).

**9 -** Dispositif suivant la revendication précédente caractérisé en ce que la cuvette sphérique (23) est décallée suivant la direction (Y) en avant ou en arrière de l'axe de symétrie verticale de telle manière que par retournement de la pièce (22) dans une rotation horizontale, on détermine deux positionnements différents selon la seconde direction de réglage (Y).
